# EUROPEAN PATENT APPLICATION

(11) **EP 0 989 527 A2**
(43) Date of publication of application: **29.03.2000**
(21) Application number: 99306691.9
(22) Date of filing: 23.08.1999
(51) Int. Cl.: G07D 7/20

(54) **Method and system for object validation**

(30) Priority: 21.08.1998 GB 9818344
(71) Applicant: Celestica Limited, Stoke-on-Trent, Staffs. ST7 1TL (GB)
(72) Inventor: Gilbert, Wayne, Stone, Staffordshire (GB)
(74) Representative: McLeish, Nicholas Alistair Maxwell

(57) **Abstract**

A system for validating objects employs a tristimulus light source (20) which illuminates a colour target image (35) with collimated light of at least one predetermined wavelength. Light reflected off the target image is directed into a photodetector array (90) arranged as a linear stack of photosensors (100). The reflected light received off the target (35) is thus quantized into a plurality of discrete regions in a first direction. The tristimulus incident beam is incrementally scanned in a second direction orthogonal to the first direction to obtain an array of numerical data based upon the colour of rectangular sub-portions of the colour image (35).

Data from a master colour image can be stored as a numerical code array. Validation of a value object such as a credit card can be achieved by comparing the data from the master image with data read from an identical image affixed to that value object. The use of colour allows each rectangular portion of the image to represent a very large amount of data.

## Description

This invention relates to a method and system for object validation and particularly, but not exclusively, to a method and system for validation of value documents and the like.

The requirement to produce secure, copy-resistant documents has become important in many commercial endeavours. For example, share certificates, software authentication or identity passes such as passports and driving licences which cannot readily be copied or altered are highly desirable. With the advent of high definition colour photocopies, the type of security markings employed have of necessity become more and more detailed. For example, many software authentication certificates now include a hologram which cannot be photocopied.

Other techniques for increasing the security of value items are known. For example, identity passes and credit cards employ data embedded in a magnetic or silicon medium.

The problem with such techniques is that they are relatively expensive to manufacture, and are also relatively easy to copy or modify with modern technology. Furthermore, the manner in which magnetic or silicon media are read means that they become worn relatively quickly.

It is an object of the present invention to address these problems with the prior art.

According to a first aspect of the present invention there is provided a method of validating an object comprising reading a colour image on the object, generating a number representative of the colour of the colour image, and comparing the generated number with a reference number, the object being validated when the generated number representative of the colour image matches the reference number.

The use of colour to obtain a numeric code provides several advantages. Firstly, the amount of information storable is potentially very large, even for a small image, and particularly when the image is read using a high colour resolution. Secondly, the image may be read in a non-contact manner, thus preventing wear to the object.

According to a second aspect of the present invention, there is provided a method of validating an object comprising reading the colour of each of a plurality of discrete regions of an image upon the object, generating an array of numbers each representative of the colour in a corresponding discrete region of the image, and comparing at least some of the generated numbers with corresponding reference numbers in a reference array, the object being validated when each of those generated numbers that are compared match a corresponding reference number.

When the image is measured in a plurality of discrete regions, in addition to the advantages outlined above, a multicoloured image, for example, may be used. In a preferred embodiment, the spatial distribution of the colours may be determined in addition to the colours themselves, thus increasing the number of variables to be matched for validation. Such a technique has applications in security marking of value items, for example.

The invention also extends to a system for validating an object, comprising a colour image mounted upon or contained within an object, and a colour image reader including a light source for illuminating the colour image, detector means for detecting the colour of the light reflected off the colour image, processor means for generating a number representative of the detected light colour, and comparator means for comparing the generated number with a reference number, the object being validated when the generated number matches the reference number.

Further advantages are set out in the dependent claims appended hereto.

The present invention may be put into practice in a number of ways, and a specific embodiment will now be described by way of example only and with reference to the following Figures in which:
Figure 1 shows a schematic diagram of an optical system suitable for reading a colour image;
Figure 2 shows a first example of a colour image suitable for marking a value item, for example; and
Figure 3 shows a second example, of a colour image suitable for marking a value item, for example.

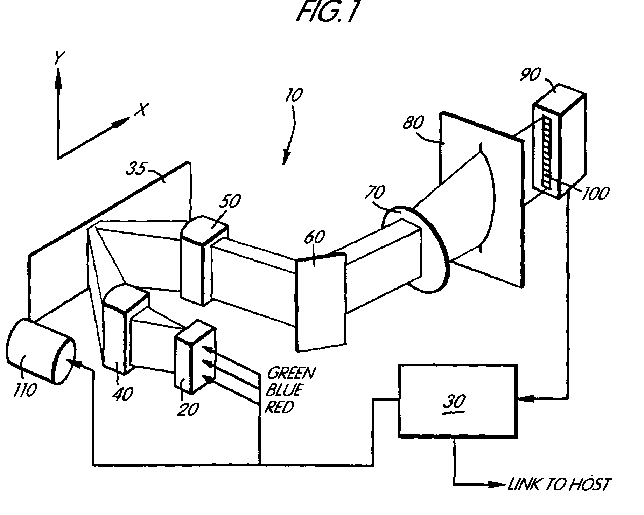

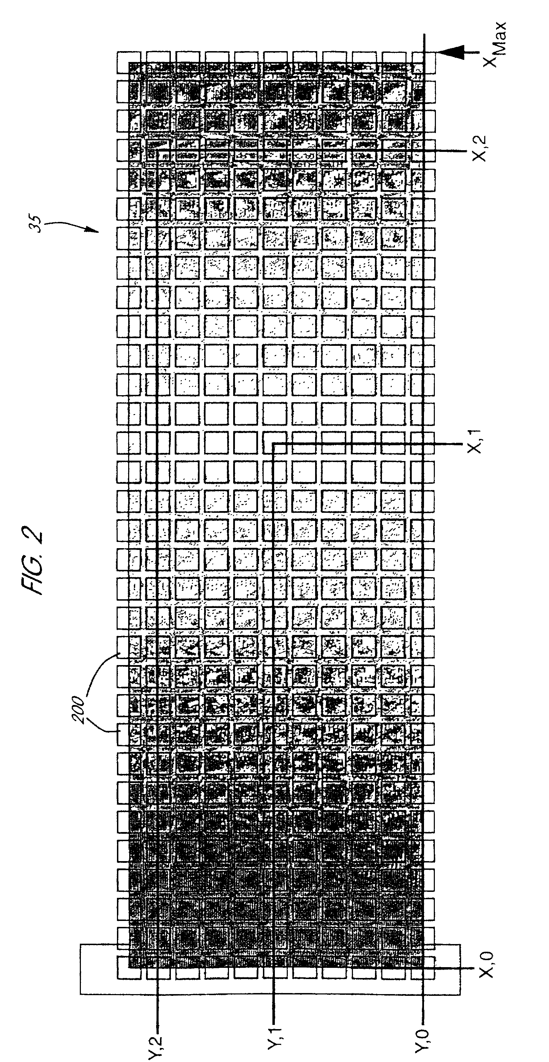

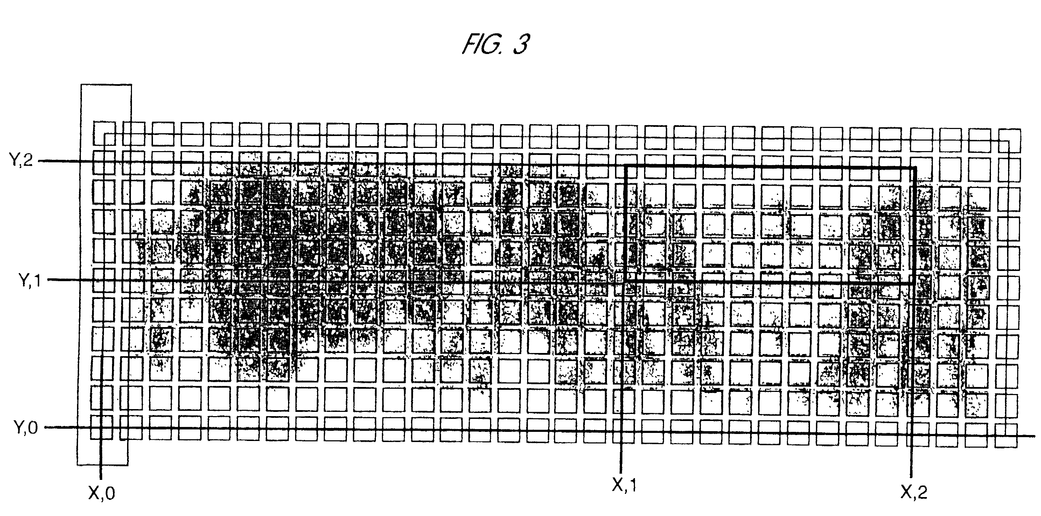

Referring first to Figure 1, an optical system 10 is shown in perspective. A tristimulus light source 20, capable of producing red, green and blue light under the control of a microcontroller 30, produces a collimated beam of light to illuminate a target image 35 via a first lens 40. The details of suitable target images will be described in further detail in connection with Figures 2 and 3.

Light reflected from the target image 35 is directed towards a second lens 50 which forms a first part of a receiving optical system. The light exiting the second lens 50 is deflected by a mirror 60 into a collimator 70. Finally, the light reflected from the target image 35 passes through a slit mask 80 and into a photodetector array 90. This results in a narrow strip of the light obtained from the target image being focussed onto photosensors 100 within the photodetector array 90.

The microcontroller 30 reads and stores the signals generated by the photodetector array 90. As seen in Figure 1, the photosensors 100 within the photodetector array 90 are stacked vertically one above the other.

In Figure 1, 13 photosensors 100 are shown, although it will be appreciated that in practice a larger number than this would typically be employed.

Thus, the microcontroller receives a plurality of discrete signals from the photodetector array. In other words, the target image 35 is quantized into n discrete regions in the Y direction, where n is the number of photosensors 100 within the photodetector array 90.

A complete array of colour information is obtained from the target image 35 by scanning the beam of light generated by the tristimulus source 20 along the target image 35 in the X direction. This may be done either by moving the target image 35 relative to a fixed incident light beam, or by moving the first lens 40, for example, relative to a fixed target image. In the apparatus illustrated in Figure 1, the position of the target image 35 relative to the sensor array is changed incrementally by using a stepper motor 110. For example, the light beam may be initially directed towards the left-hand edge of the target image 35, and then moved along the X axis thereof in fixed increments. After each step of the stepper motor 110, the photodetector array obtains colour information as previously described. Most preferably, the stepper motor is arranged to move the sensor array relative to the target image 35 by an amount in the X direction generally equivalent to the distance (in the Y direction) measured by each photosensor 100. Then, the target image 35 is quantized into a series of essentially square "pixels", and the microcontroller stores an array of colour data accordingly.

The scanning process is repeated three times. On the first pass, for example, red light is emitted from the tristimulus source 20. On the second pass, blue light is emitted instead and on the third pass, green light is emitted. The data obtained from the photodetector array 90 as incident red light is scanned across the target image 35 are stored at a first set of addresses within a system memory within the microcontroller 30. Data obtained when blue light or green light is incident are stored at second and third sets of addresses respectively. From the three separate target image patterns stored, a total image pattern may be obtained. The manner in which this is done does not form part of the present invention. It will be appreciated that a number of different ways of representing colour in terms of constituent coordinates may be used. As will be familiar to those skilled in the art, a colour may be uniquely identified by only three variables (although more variables can be employed if desirable). For example, a colour may be defined in terms of the amount of red, green and blue (the "RGB" system), hue, saturation and intensity ("HSI") or luminance and chrominance ("YC_{b}Cᵣ").

Again, the variables used to define the colours upon the target image 35 do not form part of the present invention. The skilled reader will appreciate that the system chosen will depend upon the type of photosensors 100 which are employed. HSI may be useful in certain applications where the colours are liable to fade over time (e.g. in a colour pattern upon a credit card), as, although the saturation and intensity change, the hue remains relatively constant.

It will also be appreciated that, rather than scanning the image 35 three times, three separate primary colour light sources and three sensor arrays may be used simultaneously, thus allowing complete image acquisition in a single pass.

Figure 2 shows a typical target image 35. The pixels labelled 200 are representative of the discrete areas of the target image 35 measured by the optical system 10 as a consequence of the separate photosensors 100 and the stepping action in the X direction.

The data obtained from such a target image 35 is relatively large, and will depend on a number of factors, such as the number of bits used to describe the colour of each identified pixel, and the size of each pixel itself. The latter is of course in turn dependent upon the distance stepped in the X direction and the number of photosensors 100. These variables will be chosen depending upon what the target image 35 is to be attached or printed onto. For high security applications, such as passports, it is preferable to measure the colour of each pixel to a high accuracy. For example, if each pixel is measured to 16 bits, a change in colour of one in about 65,000 can be discriminated. This in turn means that any attempt to copy the pattern must be accurate to that level, else a "match" (described below) will not be found.

Once the array of data describing the colour of each pixel has been stored in the microcontroller 30, it can be used as a security code in a number of ways. For example, if the image is to be printed or attached to a security pass for a building, then it is first read by a central computer for that building which stores the array of colour information as described above. When it is desired to enter the building, the card containing the target image 35 is placed in front of a card reader. A suitable optical system for the card reader has been described in relation to Figure 1. The card reader scans the target image 35 and obtains an array of colour data. This is passed to the central computer which compares the obtained data with that previously stored in its memory. If the array matches one of the stored arrays, then the central computer sends a signal back to the door allowing it to be opened.

Because of the potentially very large amount of data that can be stored, each person to whom entry to the building is to be permitted may be issued with differently coloured images on their entrance cards. Even using just 4 bit colour with a 32 x 11 pixel array, as shown in Figure 24, theoretically allows for over 5,500 different colour combinations, typically well in excess of the number of people who would require access to a building. Furthermore, because each person has a card bearing its own unique colour signature, further information on the owner of the card that has been identified can be stored for secondary security checks.

The arrangement may also be used upon a credit card instead of, or in addition to, a magnetic stripe. As will be well known, it is common practice in retail establishments to carry out a security check on the card during a transaction. Previous systems include a magnetic stripe reader, through which the card is dragged. This reads a unique security code upon the magnetic stripe. The magnetic stripe reader then dials up a computer database held by the card issuer. The magnetic security code is compared with that held in the card issuer's database and, provided the card has not been reported stolen or is above its credit limit, then an authorisation code is sent back from the card issuer to the magnetic stripe reader at the point of sale.

The drawbacks of this system have been outlined above. A colour image may be applied to the credit card instead. Rather than sending information obtained from a magnetic stripe, a card reader containing the optical system of Figure 1, for example, can be used to obtain and send colour information off the card instead to the card issuer as a security check.

The amount of information that can be contained upon even a very small image is potentially enormous. For example, even the simple image of Figure 2 contains over 23 million different colour combinations when measured to 16 bits. Often, it is necessary to provide this amount of information upon the card, or more, so that each card owner may have their own unique security code. Using 16 bit colours is also preferable to minimize the risk of copying. The drawback with this is the time it takes to carry out a security check by dialling up the database of the card issuer. With a standard telephone line, the typical image containing sufficient information to identify the card owner uniquely whilst providing security from copying will take several minutes to download from the card reader to the card issuer's database. This would be unacceptable to the retailer and card owner. Therefore, a number of different techniques have been developed.

The most straightforward way of reducing the amount of information sent to the remote database, without compromising the security of the card, is for the database to request only colour information regarding certain pixels within the full image. For example, referring again to Figure 2, if a reference line pair (X,0 Y,0) is chosen, then the card issuer's database may request, for example, only colour information from pixels at (X,1 Y,1) and (X,2 Y,2). The sample points may be fixed or may be changed each time a request for validation is made. Naturally, higher levels of security are provided when the colour information from more pixels within the image are used, and the level of security must therefore be traded off with the time taken to send this additional information along telephone lines.

A second, linked approach to comparison and validation of image information is to employ a larger image as a reference, but to compare only a much smaller, predetermined area of the total image with a stored image elsewhere. Again the area chosen may be fixed or altered each time validation is sought.

Yet a further technique for improving security will now be described with reference to Figure 3. Figure 3 shows a birefringence pattern.

As will be well known to those skilled in the art, birefringence is an effect caused when the refractive index of a material differs in a first direction relative to a second direction. In the present example, the colour birefringent pattern is generated by moving a textured roller across the surface of a metallized strip, having a protective plastics film on it. Stresses in the plastics film caused by the roller change the refractive index. Of course, the pattern generated by the roller will be repeated on the strip after a distance πD (D is the roller diameter), but within that distance, the pattern generated upon the strip is effectively random. Furthermore, by cutting and relocating the strips at random, the overall randomness of the patterns can be increased.

Of course, other ways of generating patterns which are random are envisaged.

Particularly (but not exclusively) when a birefringent strip such as the one shown in Fig. 3 is employed, it is preferable to use a coherent or semi-coherent light source 20 in the apparatus of Fig. 1. For example, red green and blue light emitting diodes (LEDs) can be used in the light source 20.

The microcontroller 30 (Figure 1) includes a pattern recognition algorithm to reveal embedded patterns in the colour image. The level of security is thus increased because both the embedded patterns and the colour information can be compared with those of a reference image. As previously, it may be preferable only to compare the embedded pattern and colour information in a small region of a larger image, for example the region marked and bounded by the four data points (X,1 Y,1), (X,1, Y,2), (X,2 Y,2) and (X,2 Y,1).

The technique outlined above finds numerous applications. In addition to credit cards and security passes for buildings, colour images may be printed or otherwise applied to money orders, social security documents, software licences, share certificates, passports and even banknotes. The amount of information that can be stored as a colour pattern, provided a high resolution reader is employed, means that extremely small colour images may be used. Thus, a further level of security is offered because the image may be "hidden" within other patterns on a banknote, for example.

Finally, the image acquisition system described above may also be used to read in colour bar codes. At present, bar codes are monochrome and, to increase the amount of data stored, are becoming longer and longer. Often, the amount of data that can be stored is limited by the size of the food packaging, for example, to which the bar code is attached. By using the system outlined above to read bar codes printed in colour, the amount of information stored can be increased dramatically. For example, even if each "bar" is only 2 bits (for example, red, blue, yellow and green), then the amount of information stored is quadrupled.

## Claims

1. A method of validating an object comprising:
reading a colour image on the object;
generating a number representative of the colour of the colour image; and
comparing the generated number with a reference number,
the object being validated when the generated number representative of the colour image matches the reference number.

2. A method of validating an object comprising:
reading the colour of each of a plurality of discrete regions of an image upon the object;
generating an array of numbers each representative of the colour in a corresponding discrete region of the image; and
comparing at least some of the generated numbers with corresponding reference numbers in a reference array,
the object being validated when each of those generated numbers that are compared match a corresponding reference number.

3. A method as claimed in claim 2, in which the image comprises a plurality of different colours.

4. A method as claimed in claim 2 or claim 3 in which the plurality of different colours are arranged randomly throughout the image.

5. A method as claimed in claim 4, the method further comprising measuring the spatial distribution of the randomly arranged colours, and comparing the measured spatial distribution with a reference spatial distribution, the object being validated when each of those generated numbers that are compared match a corresponding reference number, and also when the measured spatial distribution matches the reference spatial distribution.

6. A method as claimed in any of claims 2 to 5 in which the step of reading the colour of each of a plurality of discrete regions further comprises scanning the image upon the object relative to an object reader.

7. A method as claimed in any of claims 2 to 6 in which the step of reading the colour of each of a plurality of discrete regions comprises reading the colour of each of a plurality of discrete regions each having a similar area.

8. A method as claimed in any of claims 2 to 7, in which the step of comparing at least some of the generated numbers with corresponding reference numbers further comprises connecting, via a telecommunications system to a remote database containing the reference array.

9. A method as claimed in any of claims 2 to 8, in which all of the generated numbers are compared with all corresponding reference numbers.

10. A method as claimed in any of claims 2 to 8, in which only a predetermined amount of generated numbers are compared with their corresponding reference numbers.

11. A method as claimed in claim 10, in which the predetermined amount of generated numbers are each at predetermined locations with the generated array.

12. A method as claimed in any one of the preceding claims, in which the colour image is mounted upon, or contained within, a value item.

13. A system for validating an object, comprising
a colour image mounted upon or contained within an object; and
a colour image reader including a light source for illuminating the colour image, detector means for detecting the colour of the light reflected off the colour image, processor means for generating a number representative of the detected light colour, and comparator means for comparing the generated number with a reference number,
the object being validated when the generated number matches the reference number.

14. A system as claimed in claim 13, in which the detector means detects the colour of the image at a plurality of discrete locating across the image, the processor means generating an array of numbers each representative of the detected light colour at a corresponding discrete location, and the comparator means comparing at least some of the generated numbers within the array with corresponding reference numbers within a reference array, the object being validated when each of the compared numbers match corresponding numbers within the reference array.

15. A system as claimed in claim 14, in which the colour image comprises a plurality of different colours.

16. A system as claimed in claim 15, in which the plurality of different colours are randomly spatially distributed across the image.

17. A system as claimed in any of claims 14 to 16, in which the light source includes a plurality of lamps each emitting light at different frequencies within the visible spectrum.

18. A system as claimed in any of claims 14 to 17, further comprising scanning means arranged to scan the colour image relative to the colour image reader.

19. A system as claimed in any of claims 14 to 18, in which the reference array is held within a remote database, the system further comprising telecommunications means for connecting the image reader to the remote database such that the generated array of numbers may be compared with the reference array.

20. A system as claimed in any of claims 13 to 19, in which the colour image is mounted upon or contained within a value item.

21. A system as claimed in any of claims 13 to 20, in which the light source is arranged to generate coherent or semi-coherent light.
